Europäisches Patentamt

European Patent Office

Office européen des brevets

(11) Veröffentlichungsnummer: 0 379 065
A1

# EUROPÄISCHE PATENTANMELDUNG

(21) Anmeldenummer: 90100515.7

(22) Anmeldetag: 11.01.90

(51) Int. Cl.⁵: **B60B 33/02, B60B 33/04**

(30) Priorität: 13.01.89 DE 3900889

(43) Veröffentlichungstag der Anmeldung:
25.07.90 Patentblatt 90/30

(84) Benannte Vertragsstaaten:
**ES FR GB IT SE**

(71) Anmelder: **Schulte, Arnolf**
**Friedenstrasse 8c**
**D-5632 Wermelskirchen 1(DE)**

(72) Erfinder: **Schulte, Arnolf**
**Friedenstrasse 8c**
**D-5632 Wermelskirchen 1(DE)**

(74) Vertreter: **Kohlmann, Karl Friedrich, Dipl.-Ing.**
**et al**
**Hoffmann, Eitle & Partner Arabellastrasse 4**
**(Sternhaus)**
**D-8000 München 81(DE)**

(54) **Feststellbare Lenkrolle.**

(57) Eine feststellbare Lenkrolle, insbesondere für verfahrbare Krankenbetten, hat einen Befestigungszapfen (1) und einen gegenüber diesem in einem Schwenklager (7) gelagerten Schwenkarm (8). Ein Radträger (10), der wenigstens ein Laufrad (13) trägt, ist am Schwenkarm (8) schwingend gelagert und stützt sich gegen diesen über eine Radfeder (20) federnd ab. Ein koaxial zum Befestigungszapfen (1) angeordneter und gegenüber diesem in axialer Richtung gegen die Wirkung einer Hubfeder (25) verschiebbarer Feststellbolzen (21) betätigt einen Bremshebel (33), der das Laufrad (13) blockiert, und eine Vorrichtung zum Feststellen der Schwenkbewegung des Schwenkarms (8), welcher eine Feststellscheibe (38a) umfaßt. Die Schwingachse (11) des Radträgers (10) verläuft parallel zur Drehachse des Laufrads (13) und schneidet die Längsachse des Feststellbolzens (21). Der Bremshebel (33) ist im Radträger (10) parallel zur Schwingachse (11) kippbar gelagert. Die vertikale Lage des Berührpunktes zwischen dem unteren Ende des Feststellbolens (21) und dem Bremshebel (33) ist unabhängig davon, ob der Radträger (10) sich in ein- oder ausgefedertem Zustand befindet. Dies ermöglicht sowohl die Blokkierung des Laufrads (13) als auch die Feststellung der Schwenkbewegung des Schwenkarmes mittels einer Exzenterscheibe (27), die den Feststellbolzen (21) axial verschiebt.

FIG.1

## Feststellbare Lenkrolle

Die Erfindung betrifft eine feststellbare Lenkrolle, insbesondere für verfahrbare Krankenbetten, mit einem Befestigungszapfen, einem Schwenkarm, der in einem Schwenklager um den Befestigungszapfen schwenkbar gelagert ist, einer Vorrichtung zum Feststellen der Schwenkbewegung des Schwenkarms und wenigstens einem drehbar gelagerten Laufrad, ferner mit einem kippbar gelagerten Bremshebel zum Blockieren der Drehbewegung des Laufrads, sowie einem koaxial zum Befestigungszapfen angeordneten und gegenüber diesem in axialer Richtung gegen die Wirkung einer Feder verschiebbaren Feststellbolzen, der in Abhängigkeit seiner axialen Stellung den Schwenkarm feststellt und/oder über den Bremshebel das Laufrad blokkiert.

Eine derartige Lenkrolle ist aus der DE-OS 36 02 916 bekannt. Der Befestigungszapfen dient der Montage der Lenkrolle an einem rohrförmigen Fuß, beispielsweise eines Krankenbettes. Bei der vorbekannten Lenkrolle ist der Feststellbolzen axial verschiebbar, jedoch durch seinen sechseckigen Querschnitt unverdrehbar im Befestigungszapfen angeordnet. An seinem unteren Ende weist der Feststellbolzen eine angeformte Tellerscheibe auf, die an ihrer Unterseite mit einer Verzahnung versehen ist. Eine um den Befestigungszapfen schwenkbare Radgabel führt ein drehbares Laufrad. Unterhalb des Rückens dieser Radgabel ist eine Bremsschwinge schwenkbar gelagert. Die Verzahnung an der Tellerscheibe des Feststellbolzens ist mit einem an der Bremsschwinge befestigten Zahnsegment in Eingriff bringbar. Wird der Feststellbolzen mittels einer Nockenscheibe entgegen der Wirkung einer Schraubendruckfeder in seine untere Endstellung gedrückt, so greift die Verzahnung der Tellerscheibe in das Zahnsegment der Bremsschwinge ein und preßt diese fest auf die Lauffläche des Laufrads. Durch den Eingriff der Verzahnung ist außer der Abbremsung des Laufrades auch die jeweils eingestellte Schwenklage der Radgabel in bezug auf den Befestigungszapfen arretiert. Dadurch ist das Laufrad sowohl gegen Verschwenken als auch gegen Drehen blockiert. Befindet sich der Feststellbolzen unter dem Druck der Schraubendruckfeder in seiner oberen Endstellung, so rastet die Radgabel in einer Einschnappstellung ein, welche der Geradeausstellung des Laufrades entspricht. Diese Richtungsfeststellung ist insbesondere bei verfahrbaren Krankenbetten von Vorteil, um diese auch längere Strecken in einfacher Weise geradeaus verschieben zu können, ohne daß unerwünschte Schwenkbewegungen der Laufräder auftreten. Befindet sich der Feststellbolzen in einer Zwischenstellung zwischen unterer und oberer Endstellung, so läßt sich sowohl das Laufrad frei drehen als auch die Radgabel um den Befestigungszapfen ungehindert verschwenken. Das Bett ist dann in alle denkbaren Richtungen frei verschiebbar.

Nachteilig bei den bisher bekannten, hinsichtlich Schwenk- und Drehbewegung des Laufrades feststellbaren Lenkrollen ist, daß sie nicht abgefedert sind. Gerade für Krankenbetten besteht jedoch das Bedürfnis, eine federnde Lenkrolle einzusetzen, um beim Befahren von unebenen Flächen Stöße abzufedern.

Aus der DE-OS 36 12 925 ist eine federnde Lenkrolle an sich bereits bekannt, welche eine schwenkbeweglich gelagerte Schwenkgabel, eine darin parallel zur Rollenradachse kippbare Radgabel für das Lenkrollenrad und eine zwischen letzterer und der Schwenkgabel angeordnete Radgabelfeder aufweist. Diese vorbekannte Lenkrolle ist zwar abgefedert, bietet jedoch keine Möglichkeit, die Schwenkbewegung des Laufrads festzustellen und/oder dessen Drehbewegung zu blockieren.

Aufgabe der vorliegenden Erfindung ist somit die Schaffung einer Lenkrolle, bei der nicht nur die Schwenkbewegung des Laufrads festgestellt und dessen Drehbewegung blockiert werden kann, sondern die darüber hinaus auch abgefedert ist.

Bei der Lösung des gestellten technischen Problems wird ausgegangen von einer feststellbaren Lenkrolle der eingangs erwähnten Art. Gelöst wird die Aufgabe dadurch, daß am Schwenkarm ein Radträger schwingend gelagert ist, der das Laufrad trägt, daß die Schwingachse des Radträgers im wesentlichen parallel zur Drehachse des Laufrads verläuft und die Längsachse des Feststellbolzens schneidet, daß ferner der Bremshebel im Radträger gelagert ist, daß die Kippachse des Bremshebels parallel zur Schwingachse des Radträgers verläuft, und dadurch, daß der Radträger sich über eine Radfeder am Schwenkarm federnd abstützt.

Bei den aus dem Stand der Technik bekannten ungefederten Lenkrollen mit Feststellmechanismus bereitet es keine Schwierigkeiten, den Bremshebel mittels des koaxial zum Befestigungszapfen angeordneten und gegenüber diesem axial verschieblichen Feststellbolzen zu betätigen, um die Drehbewegung des Laufrad zu blockieren. Der Bremshebel hat nämlich eine in vertikaler Richtung eindeutig definierte Lage relativ zum Befestigungszapfen, da ja der Schwenkarm mitsamt dem darauf montierten Bremshebel ausschließlich in horizontaler Richtung verschwenkbar ist. Um nun die Blockierung der Drehbewegung des Laufrads sowohl in eingefedertem wie auch in ausgefedertem Zustand zuverlässig zu gewährleisten, ist bei der erfindungsgemäßen Lenkrolle der Bremshebel im abgefederten Radträger, der das Laufrad trägt, gelagert. Damit dennoch der Bremshebel durch eine axiale Verschiebung des Feststellbolzens gegenüber dem Befestigungszapfen um einen stets gleichbleibenden Hub betätigt werden kann, läuft gemäß einem weiteren wesentlichen Merkmal der Erfindung die Schwingachse des Radträgers parallel zur Achse des Laufrads und schneidet die Längsachse des Feststellbolzens. Der Berührpunkt zwischen Feststellbolzen und Bremshebel, welcher zwangsläufig ebenfalls auf der Längsachse des Feststellbolzens liegt, bleibt somit unabhängig von Schwenkbewegungen des Radträgers. Da der Hub, um den der Feststellbolzen zur Blockierung der Drehbegung des Laufrads verschoben werden muß, somit in ein- und ausgefedertem Zustand stets derselbe ist, kann in die erfindunsgemäß ausgebildete Lenkrolle problemlos eine zusätzliche Vorrichtung zum Feststellen der Schwenkbewegung des Schwenkarms um den Befestigungszapfen integriert werden, welche ebenfalls durch eine axiale Verschiebung des Feststellbolzens betätigt wird.

Die mit der Erfindung vorgeschlagene Lenkrolle weist also nicht nur die bekannten Vorzüge der Feststellbarkeit der Schwenkbewegung und Blockierung der Drehbewegung des Laufrads über einen einzigen zentralen Feststellbolzen auf, sondern hat darüber hinaus den Vorteil, daß das Laufrad abgefedert ist.

In Weiterbildung der erfindungsgemäßen Lenkrolle trägt das Laufrad einen koaxial um seine Nabe angeordneten Bremskranz und ist der Bremshebel als zweiarmiger Hebel ausgebildet, dessen eines Ende ein mit dem Bremskranz zusammenwirkendes Bremsorgan trägt, und dessen anderes Ende mit dem unteren Ende des Feststellbolzens zusammenwirkt. Der zweiarmig ausgebildete Bremshebel stellt dabei ein Übertragungselement zwischen Feststellbolzen und Bremsorgan dar. Eine axiale Verschiebung des Feststellbolzens führt dadurch zu einer gegensinnigen Bewegung des Bremsorgans zum Bremskranz hin bzw. von diesem weg.

Zweckmäßig weist der Radträger wenigstens einen Achsstummel zur Aufnahme der Nabe des Laufrads auf. Es können auch zwei Laufräder in geringem Abstand nebeneinander auf dem Radträger gelagert sein. Derartige Doppelrollen verteilen die verfahrbare Last auf eine entsprechend vergrößerte Radaufstandsfläche. Dabei wird eine Ausführung bevorzugt, bei der die Drehachsen der beiden Laufräder unter Bildung eines spitzen Winkels nach unten geneigt sind. Der hierdurch bewirkte negative Sturz der Laufräder verbessert die Lenkbarkeit.

In zweckmäßiger Ausgestaltung der erfindungsgemäßen Lenkrolle ist die Radfeder, die den Radträger gegenüber dem Schwenkarm abfedert, als Schraubenfeder ausgebildet. Die Radfeder kann jedoch auch als Blatt- oder Drehstabfeder ausgestaltet sein. Ein Federgehäuse, welches Teil des Schwenkarms ist, kann die Radfeder aufnehmen und schützen.

Bei einer Weiterbildung der Erfindung ist der Radträger als einarmiger Hebel ausgebildet, ist am freien Ende des Radträgers ein Federteller zur Aufnahme des unteren Endes der Radfeder vorgesehen und liegt die Drehachse des Laufrads zwischen der Schwingachse und der Radfeder. Diese Ausbildung und Lagerung des Radträgers hat den Vorteil, daß die Abfederung durch eine einzige Radfeder erfolgen kann.

Ein Radträger, dessen eines Ende schwenkbar gelagert ist, und der sich mit seinem anderen Ende gegenüber dem nicht gefederten Schwenkarm über die Radfeder abstützt, bildet mit der Radfeder nur in einem bestimmten Belastungszustand einen rechten Winkel. Bei einer weiteren vorteilhaften Ausführung der erfindungsgemäßen Lenkrolle weist der Radträger deshalb einen Lagerzapfen auf, welcher sich parallel zur Schwingachse des Radträgers erstreckt, ist auf diesem Lagerzapfen ein Federbock kippbar gelagert und ist der Federteller zur Aufnahme des unteren Endes der Radfeder an der Oberseite dieses Federbocks ausgebildet. Auch bei einer Verschwenkung des Radträgers aus der Horizontalen bleibt der seinerseits gegenüber dem Radträger kippbar gelagerte Federbock stets in einer aufrechten, mit der Längsachse der Radfeder übereinstimmenden Lage. Diese wird somit stets in Längsrichtung beaufschlagt. Ein am Federbock zusätzlich vorgesehener Führungszylinder für die Radfeder verhindert ein Herausspringen derselben aus dem Federteller.

Bei einer vorteilhaften Ausführungsform der Erfindung wird die Vorrichtung zum Feststellen der Schwenkbewegung des Schwenkarms dadurch realisiert, daß der Feststellbolzen mehrkantigen Querschnitt hat, daß der Befestigungsbolzen eine axiale Bohrung entsprechenden Querschnitts aufweist, in welcher der Feststellbolzen unverdrehbar geführt ist, daß an dem Schenkarm ein Zahnkranz ausgebildet ist, daß mit dem Feststellbolzen eine Feststellscheibe unverdrehbar verbunden ist, welche an ihrer Unterseite eine Zahnung aufweist, daß ferner diese Feststellscheibe unter der Wirkung einer Feststellfeder mit dem Zahnkranz in Eingriff bringbar ist, um so die Schwenkbewegung des Schwenkarms um den Befestigungszapfen festzustellen, und schließlich dadurch, daß der Feststellbolzen eine Hubscheibe trägt, die bei axialer Verschiebung des Feststellbolzens nach oben die Feststellscheibe vom Zahnkranz abhebt. Wie bereits erwähnt, erfolgt das Blockieren der Drehbewegung des Laufrads durch eine axiale Verschiebung des Feststellbolzens um einen Hub, der unabhängig von der Schwenklage des abgefederten Radträgers gegenüber dem Schwenkarm ist. Dies erlaubt es, die axiale Verschieblichkeit des Feststellbolzens in an sich bekannter Weise auch zur Feststellung der Schwenkbewegung des Schwenkarms um den Befestigungszapfen auszunützen. Hierzu bringt eine entsprechende axiale Verschiebung des Feststellbolzens die mit diesem unverdrehbar verbundene Feststellscheibe mit dem am Schwenkarm ausgebildeten Zahnkranz in Eingriff. Bei axialer Verschiebung des Feststellbolzens in entgegengesetzter Richung hebt die an letzterem vorgesehene Hubscheibe die Feststellscheibe wieder vom Zahnkranz ab, wodurch die Schwenkbeweglichkeit des Schwenkarms gegenüber dem Befestigungszapfen wieder hergestellt ist.

Zusätzlich zur totalen Feststellung der Schwenkbewegung des Schwenkarms in jeder beliebigen Winkelstellung ist es wünschenswert, davon unabhängig eine Verrastung in bestimmter Winkellage, insbesondere in Geradeausstellung des Laufrads, herbeiführen zu können. Dieses Ziel ist bei einer bevorzugten Ausführung der feststellbaren Lenkrolle erreicht, welche sich daduch auszeichnet, daß die Feststellscheibe gegenüber dem Feststellbolzen axial verschiebbar ist, daß an dem Schwenkarm oberhalb des Zahnkranzes ein Rastkranz ausgebildet ist, dessen Druchmesser größer ist als derjenige des Zahnkranzes, daß mit dem Feststellbolzen oberhalb der Feststellscheibe eine Rastscheibe unverdrehbar, jedoch axial verschiebbar verbunden ist, welche an ihrer Unterseite Rastausnehmungen aufweist und deren Durchmesser größer ist als derjenige der Feststellscheibe, daß diese Rastscheibe unter der Wirkung der Rastfeder mit dem Rastkranz in Eingriff bringbar ist, um so den Schwenkarm mit dem Befestigungszapfen in Geradeausstellung des Laufrads zu verrasten, daß ferner die Feststellfeder zwischen der Oberseite der Feststellscheibe und der Unterseite der Rastscheibe angeordnet ist, und dadurch, daß die Federkraft größer ist als diejenige der Feststellfeder. Bei dieser konstruktiven Ausgestaltung der Feststelleinrichtung wird der Feststellbolzen von zwei übereinander angeordneten Scheiben konzentrisch umgeben, von denen die obere eine Verrastung des Schwenkarms nur bei Geraudeausstellung des Laufrads bewirkt, während die untere Scheibe die Totalfeststellung des Schwenkarms in jeder beliebigen Winkelstellung ermöglicht.

Die Funktionen der beiden koaxial übereinander angeordneten Scheiben läßt sich auch vertauschen, so daß die obere Scheibe als Feststellscheibe und die untere als Rastscheibe wirkt. Bei dieser alternativen Ausführungsform der Feststelleintung muß die oben angeordnete Feststellscheibe mit dem Feststellbolzen nicht nur radial, sondern zusätzlich auch axial fest verbunden sein. Im übrigen entspricht die konstruktive Ausgestaltung der vorstehend beschriebenen Ausführung.

Zweckmäßigerweise ist die Oberseite der Rastscheibe bzw. der Feststellscheibe als Federteller zur Aufnahme der Rastfeder bzw. der Feststellfeder ausgebildet. Die Unterseite der Rastscheibe bzw. Feststellscheibe kann ferner eine Ringnut aufweisen, welche eine Zentrierung der Feststellfeder bzw. der Rastfeder bewirkt.

Lenkrollen sollten mit wenigen Handgriffen leicht austauschbar sein. Diese Forderung ist insbesondere dann schwer zu erfüllen, wenn, wie bei verfahrbaren Krankenbetten heute üblich, die Feststellung der Schwenk-und Drehbewegung der Laufräder aller vier Rollen zentral über ein Gestänge betätigt wird. In bevorzugter Weiterbildung der mit der Erfindung geschaffenen feststellbaren Lenkrolle ist deshalb im oberen Teil des Befestigungszapfens ein Aufnahmeraum ausgebildet, ist in diesem Aufnahmeraum eine Exzenterscheibe senkrecht zur Längsachse des Feststellbolzens drehbar gelagert und verschiebt diese Exzenterscheibe den Feststellbolzen aus seiner oberen Ruhelage axial nach unten. Die Integrierung der Exzenterscheibe in den oberen Teil des Befestigungszapfens erlaubt eine Vormontage des Betätigungsmechanismus für den Feststellbolzen. Ebenso wird der Austausch einer Lenkrolle ohne die Demontage des bettenseitigen Schaltgestänges möglich. Zur Montage bzw. Demontage müssen lediglich die Verbindungen zwischen den Exzenterscheiben der Lenkrollen und dem Betätigungsgestänge hergestellt bzw. gelöst werden.

Um ein möglicherweise vorhandenes Spiel zwischen Feststellbolzen und kippbar gelagertem Bremshebel auszugleichen und Beschädigungen des Bremskranzes zu verhindern, ist es wünschenswert, wenn der Bremshebel elastisch gegen den Bremskranz gedrückt wird. Bei einer besonders bevorzugten Ausführung der erfindungsgemäßen Lenkrolle ist deshalb zwischen Feststellbolzen und Exzenterscheibe ein elastisches Zwischenelement angeordnet. Die Exzenterscheibe wirkt dabei nicht direkt, sondern über ein axial verschiebliches Druckstück auf dieses elastische Zwischenelement ein. Der Feststellbolzen trägt an seinem oberen Ende eine Kopfplatte, auf dessen Oberseite das nachgiebige Zwischenelement aufliegt. Kopfplatte, Zwischenelement und Druckstück können sich in einer zylindrischen Ausnehmung in axialer Richtung bewegen, welche um das obere Ende des Feststellbolzens im Befestigungszapfen ausgebildet ist. Eine entsprechende Verdrehung der Exzenterscheibe verschiebt den Feststellbolzen axial in seine untere Endstellung, wodurch das Bremsorgan des Bremshebels mit dem Bremskranz des Laufrades in Eingriff kommt. Sollte dabei das Bremsorgan nicht sofort mit dem Bremskranz verrasten, so wird der sich hieraus ergebende, etwas verringerte Weg des Feststellbolzens durch die Nachgiebigkeit des elastischen Zwischenelements ausgeglichen. Bei der kleinsten Drehbewegung des Laufrades wird das Bremsorgan vollständig in den Bremskranz einrasten, wobei der Feststellbolzen das letzte Stückchen Weg in seine unterste Endstellung zurücklegt. Ebenso verhindert das elastische Zwischenelement ein ungewolltes Ausrasten des Bremsorgans aus dem Bremskranz auch dann, wenn beispielsweise die Lagerung des Bremshebels oder der Exzenterscheibe ein gewisses Spiel aufweist.

Vorteilhaft weist die Exzenterscheibe an ihrem Umfang drei Anlagenbereiche für drei definierte axiale Stellungen des Feststellbolzens auf. Dabei entspricht der erste Anlagenbereich mit dem geringsten Durchmesser der oberen Endstellung des Feststellbolzen, bei der das Laufrad drehbar und schwenkbar ist. Der mittlere Anlagenbereich, der gegenüber dem ersten Anlagenbereich einen größeren Durchmesser aufweist, entspricht einer axialen Zwischenstellung des Feststellbolzens, bei der der Schwenkarm nur noch begrenzt um den Befestigungszapfen schwenkbar ist, bis eine Verrastung in Geradeausstellung des Laufrads erfolgt. Kommt die Exzenterscheibe mit ihrem dritten Anlagenbereich, welcher den größten Durchmesser besitzt, zur Anlage, so nimmt der Feststellbolzen seine untere Endstellung ein, bei der sowohl die Schwenkbewegung des Schwenkarms gegenüber dem Befestigungszapfen festgestellt ist, als auch die Drehbewegung des Laufrads mittels des Bremshebels blockiert ist.

Besonders bewährt hat sich eine Ausführung, bei der die Feder, welche auf den Feststellbolzen einwirkt, diesen konzentrisch umgibt und zwischen der Unterseite, dessen Kopfplatte und dem Boden der im oberen Teil des Befestigungszapfens vorgesehenen Ausnehmung eingespannt ist. Hierdurch ergibt sich eine Kraftrichtung der Feder, welche den Feststellbolzen nach oben zu drücken versucht. Wird der Feststellbolzen, ausgehend von seiner oberen Endstellung, durch Verdrehen der Exzenterscheibe axial nach unten verschoben, so muß dies gegen die zunehmende Kraftwirkung dieser Feder geschehen.

Die Lenkrolle läßt sich besonders leicht in ein Fußrohr eines Krankenbettes von unten einschieben, wenn der Befestigungszapfen aus einer einteiligen Lagerhülse, der die Exzenterscheibe enthält, und einem Führungsstück, in der der Feststellbolzen geführt ist, zusammengesetzt ist. Die mit ihrer Lagerhülse von unten in ein Fußrohr des Bettes eingeschobene Lenkrolle läßt sich mit einer einzigen Befestigungsschraube befestigen, welche das Fußrohr und die Lagerhülse durchsetzt und so Lagerhülse, Führungsstück und Fußrohr in ihrer Lage zueinander fixiert.

Es ist nicht immer erforderlich, daß eine Lenkrolle neben der Totalfeststellung der Schwenkbewegung auch die Möglichkeit einer Feststellung in bevorzugter Winkelstellung, also beispielsweise Geradestellung des Laufrads, bietet. Für viele Anwendungsfälle genügt es, wenn die Schwenkbewegung aus beliebiger Winkelstellung heraus festgestellt werden kann und zudem das Laufrad blokkierbar ist. Unter Kostengesichtspunkten kommt auch der Einsatz eines einfachen Gleitlagers als Schwenklager anstelle eines aufwendigen Kugellagers in Betracht. Die Erfindung umfaßt deshalb auch eine konstruktiv einfachere Ausführung einer gefederten, feststellbaren Lenkrolle. Diese ist dadurch gekennzeichnet, daß der Schwenkarm gegenüber dem Befestigungszapfen axial verschiebbar ist, daß die Feder zwischen Befestigungszapfen und Schwenkarm angeordnet ist, daß am unteren Ende des Befestigungszapfens ein Zahnring vorgesehen ist, daß ferner das obere Ende des Schwenkarms eine Gegenzahnung trägt, welche gegen die Wirkung der Feder mit dem Zahnring in Eingriff bringbar ist, um so die Schwenkbewegung des Schwenkarms um den Befestigungszapfen festzustellen, und daß der Feststellbolzen innerhalb des Schwenkarms angeordnet ist. Auch bei dieser einfacheren Lenkrolle ist es ein wesentliches Merkmal, daß die Schwingachse des abgefederten Radträgers die Längsachse des Feststellbolzens schneidet, so daß der Berührpunkt zwischen Feststellbolzen und Bremshebel unabhängig von einer vertikalen Verschwenkung des Radträgers gegenüber dem Schwenkarm ist. Diese Geometrie ermöglicht es, für die Feststellung der Schwenkbewegung des Schwenkarms und die Blockierung der Drehbewegung des Laufrads einen einzigen gemeinsamen Feststellmechanismus vorzusehen.

Eine bevorzugte Ausführung dieser einfacheren Lenkrolle zeichnet sich dadurch aus, daß das Laufrad einen koaxial um seine Nabe angeordneten Bremskranz trägt, daß der Bremshebel als zweiarmiger Hebel ausgebildet ist, dessen eines Ende ein mit dem Bremskranz zusammenwirkendes Bremsorgan trägt und dessen anderes Ende mit dem unteren Ende des Feststellbolzens zusammenwirkt, daß ein Drehexzenter am Radträger parallel zur Kippachse des Bremshebels drehbar gelagert ist, und daß dieser Drehexzenter auf den Bremshebel in der Nähe des Bremsorgans einwirkt. Der zweiarmig ausgeführte Bremshebel überträgt nicht nur die vom Drehexzenter aufgebrachte Kraft auf das Bremsorgan, sondern hat hier gleichzeitig die Funktion eines Übertragungshebels, der mit seinem gegenüberliegenden Ende in Abhängigkeit von der Stellung des Drehexzenters den Feststellbolzen axial nach oben verschiebt.

Bewährt hat sich ferner eine Ausführung, bei der der Bremshebel im Bereich seines das Bremsorgan tragenden Endes eine Kröpfung aufweist. Die Nocken des Drehexzenters können so auf der Kröpfung ablaufen.

Zur Betätigung ist der Drehexzenter zweckmäßig mit einem Fußhebel verbunden. Beim Drücken dieses Fußhebels nach unten wird - über die axiale Verschiebung des Feststellbolzens - zuerst der Schwenkarm festgestellt und - mittels des Bremsorgans - bei weiterem Niederdrücken zusätzlich die Drehbewegung des Laufrads blockiert.

Um stets ein sicheres Blockieren des Laufrads zu gewährleisten, kann der Feststellbolzen innerhalb des Schwenkarms axial verschiebbar geführt sein und unter der Wirkung eines elastischen Zwischenelements stehen. Die kraftspeichernde Wirkung dieses elastischen Zwischenelements sorgt dafür, daß das am Bremshebel angeordnete Bremsorgan mit federndem Druck zur Anlage an den Bremskranz am Laufrad kommt. Zusätzlich kann ein eventuell vorhandenes Lagerspiel des Bremshebels ausgeglichen werden. Im Inneren des Schwenkarms kann eine Aufnahme für das obere Ende des Feststellbolzens ausgebildet sein, wobei dann zweckmäßigerweise das elastische Druckstück zwischen dieser Aufnahme und dem Feststellbolzen angeordnet ist.

Zwei Ausführungsbeispiele der Erfindung werden nachstehend anhand der beigefügten Zeichnungen näher erläutert. Es zeigen:

Fig. 1 eine erste Ausführungsform einer feststellbaren Lenkrolle, in einem Vertikalschnitt;

Fig. 2 die Lenkrolle von Fig. 1, rechts in einem Vertikalschnitt entlang der Linie A-A und links in einem Vertikalschnitt entlang der Linie B-B;

Fig. 3 eine zweite Ausführungsform einer feststellbaren Lenkrolle, in einem Vertikalschnitt;

Fig. 4 die Lenkrolle von Fig. 3, rechts in einem Vertikalschnitt und links in einer Ansicht von vorne.

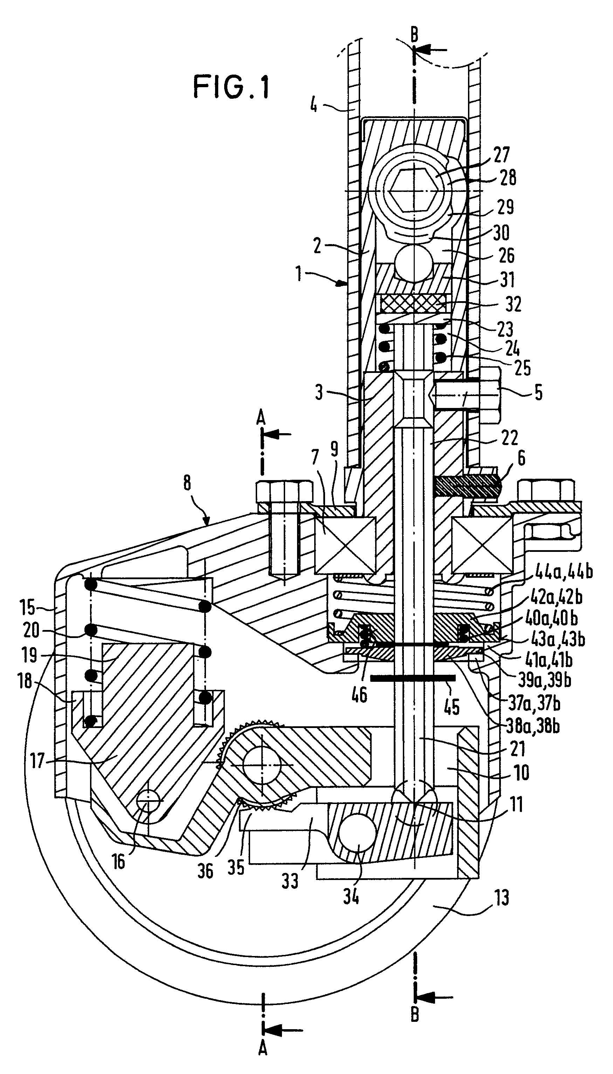

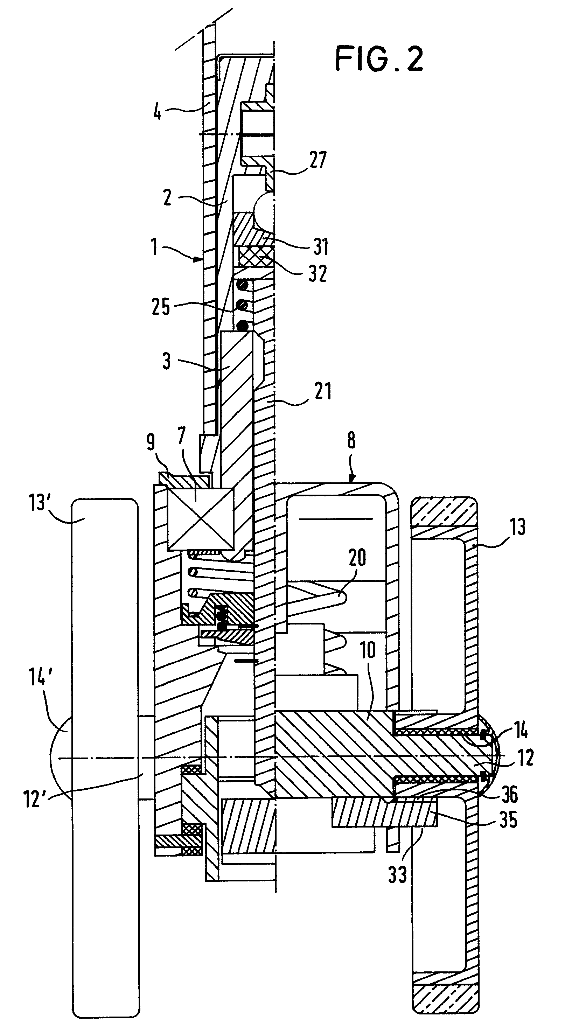

Die in den Fig. 1 und 2 dargestellte Lenkrolle hat einen Befestigungszapfen 1, der zweiteilig ausgebildet ist und aus einer zylindrischen Lagerhülse 2 sowie einem in diese eingeschobenen Führungsstück 3 zusammengesetzt ist. Die Lagerhülse 2 ist in das unten offene Ende eines Fußrohres 4 eines (nicht dargestellten) Krankenbettes eingeschoben. Eine Befestigungsschraube 5 durchsetzt das Fußrohr 4 und die Lagerhülse 2 und ist in das Führungsstück 3 eingeschraubt. Lagerhülse 2 und Führungsstück 3 sind außerdem durch einen Stift 6 gegenseitig fixiert.

Am unteren Ende des Führungsstückes 3 ist koaxial ein als Kugellager ausgebildetes Schwenklager 7 angeordnet. Mittels dieses Schwenklagers 7 ist ein Schwenkarm 8 um die Längsachse des Befestigungszapfens 1 schwenkbeweglich an dessen Führungsstück 3 montiert. Der Schwenkarm 8 und das Schwenklager 7 werden gemeinsam von einer Abdeckplatte 9 nach oben abgedeckt.

Am Schwenkarm 8 ist ein Radträger 10 um eine Schwingachse 11 schwingend gelagert. Der Radträger 10 trägt auf jeder Seite einen Achsstummel 12, 12', auf denen jeweils ein Laufrad 13, 13' mit seiner Nabe 14, 14' drehbar gelagert ist. Die beiden Laufräder 13, 13' sind parallel und im Abstand voneinander angeordnet.

Am Schwenkarm 8 ist ein zentrales Federgehäuse 15 ausgebildet. Der Radträger 10 weist an seinem freien Ende einen Lagerzapfen 16 auf, der sich parallel zur Schwingachse 11 erstreckt. Auf diesem Lagerzapfen 16 ist ein Federbock 17 kippbar gelagert, dessen Oberseite als Federteller 18 ausgebildet ist. Koaxial zum Federteller 18 erstreckt sich von der Oberseite des Federbocks 17 ein Führungszylinder 19 nach oben. Eine Radfeder 20, die als Schraubenfeder ausgebildet ist, stützt sich mit ihrem oberen Ende an der Oberseite des Federgehäuses 15 ab und liegt mit ihrem unteren Ende auf dem Federteller 18 des Federbocks 17 auf, wobei sie den Führungszylinder 19 konzentrisch umgibt.

Koaxial zum Befestigungszapfen 1 ist ein sechseckiger Feststellbolzen 21 in einer axialen Bohrung 22, die ebenfalls sechseckigen Querschnitt aufweist, im Führungsstück 3 unverdrehbar, jedoch axial verschiebbar geführt. An seinem oberen Ende trägt der Feststellbolzen 21 eine Kopfplatte 23, die runden Querschnitt aufweist und deren Durchmesser etwas größer ist als derjenige des Feststellbolzens 21. In der Lagerhülse 2 ist eine zylindrische Ausnehmung 24 ausgebildet, in der das obere Ende des Feststellbolzens 21 mit seiner Kopfplatte 23 hineinragt. Zwischen der Unterseite der den Feststellbolzen 21 seitlich überragenden Kopfplatte 23 und dem Boden des Aufnahmeraums 24, der gleichzeitig die Oberseite des Führungsstückes 3 darstellt, ist eine Hubfeder 25 eingespannt, welche den Feststellbolzen 21 nach unten zu drücken sucht.

Die Ausnehmung 24 mündet nach oben in einen Aufnahmeraum 26, der ebenfalls innerhalb der Lagerhülse 2 ausgebildet ist. In diesem Aufnahmeraum 26 ist eine Exzenterscheibe 27 senkrecht zur Längsachse des Feststellbolzens 21 drehbar gelagert. An ihrem Umfang weist die Exzenterscheibe 27 drei Anlagenbereiche 28, 29 und 30 mit abgestuftem Durchmesser auf. Eine Verdrehung der Exzenterscheibe 27 bringt einen dieser Anlagenbereiche 28, 29 bzw. 30 in Anlage mit einem Druckstück 31, das in der Ausnehmung 24 axial verschieblich geführt ist. Zwischen Druckstück 31 und Oberseite der Kopfplatte 23 des Feststellbolzens 21 ist ein elastisch zusammendrückbares Zwischenelement 32 angeordnet. Eine Verdrehung der Exzenterscheibe 27 verschiebt den Feststellbolzen 21 gegen die Wirkung der Hubfeder 25 stufenweise nach unten.

In dem Radträger 10 ist ein Bremshebel 33 kippbar gelagert. Die Kippachse 34 des Bremshebels 33 ist ungefähr in der Mitte zwischen der Längsachse des Feststellbolzens 21 und der Drehachse des Laufrads 13 angeordnet. Der Bremshebel 33 ist als zweiarmiger Hebel ausgebildet, auf dessen einem Ende der unten zugespitzte Feststellbolzen 21 aufsteht, und dessen anderes Ende ein Bremsorgan 35 trägt. Das Laufrad 13 trägt einen koaxial um seine Nabe 14 angeordneten Bremskranz 36, der mit dem Bremsorgan 35 zusammenwirkt.

Die Schwingachse 11 des Radträgers 10 verläuft parallel zur Drehachse der Laufräder 13, 13' und schneidet die Längsachse des Feststellbolzens 21. Bei dieser Ausführung durchstößt die Schwingachse 11 den Berührpunkt zwischen dem unteren Ende des Feststellbolzens 21 und dem Bremshebel 33. Federt der Radträger 10 unter Zusammendrücken der Radfeder 20 gegenüber dem Schwenkarm 8 bzw. dem Federgehäuse 15 ein, so hat dies auf die vertikale Lage des Berührpunktes zwischen Feststellbolzen 21 und Bremshebel 33 keinen Einfluß. Der axiale Weg, den der Feststellbolzen 21 nach unten zurücklegen muß, um über den Bremshebel 33 das Bremsorgan 35 in Eingriff mit dem Bremskranz 36 zu bringen, ist somit stets gleich, unabhängig davon, ob und wie weit der Radträger 10 gegenüber dem Schwenklager 7 vertikal verschwenkt ist.

An einem rotationssymmetrischen Teil des Schwenkarms 8 ist koaxial zur Längsachse des Befestigungszapfens 1 bzw. des Feststellbolzens 21 ein Zahnkranz 37a ausgebildet. Mit dem Feststellbolzen 21 ist eine Feststellscheibe 38a unverdrehbar, jedoch axial verschiebbar verbunden. Die untere Seite der Feststellscheibe 38 ist mit einer Zahnung 39a versehen. Unter der Wirkung einer Feststellfeder 40a ist die Feststellscheibe 38a mit ihrer Zahnung 39a in Eingriff mit dem Zahnkranz 37a am Schwenkarm 38 in Eingriff bringbar. Oberhalb des Zahnkranzes 37a ist an dem Schwenkarm 8 ferner ein Rastkranz 41a ausgebildet, dessen Durchmesser etwas größer ist als derjenige des Zahnkranzes 37a. Mit dem Feststellbolzen 21 ist ferner eine Rastscheibe 42a unverdrehbar, jedoch axial verschiebbar verbunden, welche an ihrer Unterseite Rastausnehmungen 43a aufweist, und deren Durchmesser etwas größer ist als derjenige der Feststellscheibe 38a. Diese Rastscheibe 42a ist unter der Wirkung einer Rastfeder 44a mit dem Rastkranz 41a in Eingriff bringbar. Die Federkraft der Rastfeder 44a ist größer als diejenige der Feststellfeder 40a, welche zwischen der Oberseite der Feststellscheibe 38a und der Unterseite der Rastscheibe 42a angeordnet ist. Unterhalb der Feststellscheibe 38a ist am Feststellbolzen 21 eine Hubscheibe 45 fest montiert. Diese Hubscheibe 45 kommt bei einer Aufwärtsbewegung des Feststellbolzens 21 an die Unterseite der Feststellscheibe 38a zur Anlage.

Wird nun durch begrenztes Verdrehen der Exzenterscheibe 27 in Richtung des Uhrzeigers der Feststellbolzen 21 aus seiner oberen Ruhestellung axial nach unten verschoben, so sitzt zunächst die obere der beiden Scheiben, die Rastscheibe 42a, auf dem am Schwenkarm 8 ausgebildeten Rastkranz 41a auf. Treffen die im Winkel von 180° an der Rastscheibe 42a vorgesehenen Rastausnehmungen 43a dabei auf die zugehörigen Rasten des Rastkranzes 41a, so wird der Schwenkarm unter der Wirkung der Rastfeder 44a in 180°-Stellung, welche der Geradeausstellung der Laufräder 13, 13' entspricht, festgestellt. Sollten die Rastausnehmungen 43a nicht auf die korrespondierenden Rasten des Rastkranzes 41a treffen, so läßt sich bei dieser axialen Stellung des Feststellbolzens 21 der Schwenkarm 8 gegenüber dem Befestigungszapfen 1 gerade noch so weit verschwenken, bis die Rastscheibe 42a unter der Wirkung der Rastfeder 44a in den Rastkranz 41a einrastet.

Ein weiteres Verdrehen der Exzenterscheibe 27 verschiebt den Feststellbolzen 21 weiter nach unten in eine tiefere abgesenkte Stellung, bei der die bisher an der Unterseite der Feststellscheibe 38a anliegende Hubscheibe 45 sich von dieser entfernt. Unter Entspannung der bis dahin zusammengedrückten Feststellfeder 40a gelangt die Zahnung 39a an der Unterscheibe der Feststellscheibe 38a in Eingriff mit dem Zahnkranz 37a am Schwenkarm 8. Dies führt zur Totalfeststellung des Schwenkarms 8 gegenüber dem Befestigungszapfen 1, unabhängig von der momentanen Winkelstellung.

Wird die Exzenterscheibe 27 noch weiter verdreht, so kommt schließlich der Anlagenbereich 30 mit dem geringsten Durchmesser zur Anlage auf dem Druckstück 31. Der Feststellbolzen 21 gelangt hierdurch in seine unterste axiale Stellung und drückt über den Bremshebel 33 das auf diesem sitzende Bremsorgan 35 gegen den Bremskranz 36 auf der Nabe 14 des Laufrades 13. In dieser unteren Endstellung des Feststellbolzens 21 ist somit nicht nur der Schwenkarm 8 gegenüber dem Befestigungszapfen 1, und damit auch gegenüber dem Fußrohr 4, festgestellt, sondern auch gleichzeitig das Laufrad 13 blockiert.

Ein Zurückdrehen der Exzenterscheibe 27 entgegen dem Uhrzeigersinn läßt den Feststellbolzen 21 unter der Wirkung der Hubfeder 25 stufenweise in seine oberste axiale Stellung zurückkehren. Dabei wird zuerst die Blockierung des Laufrads 13 gelöst. Anschließend hebt die Hubscheibe 45 zuerst die untere Feststellscheibe 38a und dann die darüber angeordnete Rastscheibe 42a vom Zahnkranz 37a bzw. Rastkranz 41a ab, wodurch die Schwenkbeweglichkeit des Schwenkarms 8 gegenüber dem Befestigungszapfen 1 wiederhergestellt wird.

Bei einer alternativen Ausführungsform der Lenkrolle, die ebenfalls in den Fig. 1 und 2 dargestellte Lenkrolle ist, ist die Funktion der beiden koaxial um den Feststellbolzen 21 angeordneten Scheiben vertauscht, so daß die untere Scheibe als Rastscheibe 38b und die obere Scheibe als Feststellscheibe 42b ausgebildet ist. Bedingung hierfür ist allerdings, daß die obere Feststellscheibe 42b nicht nur unverdrehbar, sondern auch in axialer Richtung unverschiebbar mit dem Feststellbolzen, beispielsweise durch einen (nicht dargestellten) Querbolzen oder eine zusätzliche Hubscheibe, befestigt ist. Auch bei dieser Ausführung erfolgt bei einer Verschiebung des Feststellbolzens 21 nach unten zunächst eine Verrastung des Schwenkarms 8 in Geradeausstellung der Laufräder 13, 13' und bei weiterem Absenken die Totalfeststellung der Schwenkbewegung unabhängig von der momentanen Winkelstellung, in der der Schwenkarm 8 bzw. die Laufräder 13, 13' gegenüber dem Befestigungszapfen 1 bzw. dem Fußrohr 4 gerade stehen.

Die Oberseite der Rastscheibe 42a, 38b bzw. der Feststellscheibe 38a, 42b ist als Federteller zur Aufnahme der Rastfeder 44a bzw. Feststellfeder 44b ausgebildet. Die untere Seite der Rastscheibe 38b, 42a bzw. Feststellscheibe 38a, 42b weist eine Ringnut 46 auf, welche die Feststellfeder 40a, 44b bzw. Rastfeder 40b bzw. 44a zentriert.

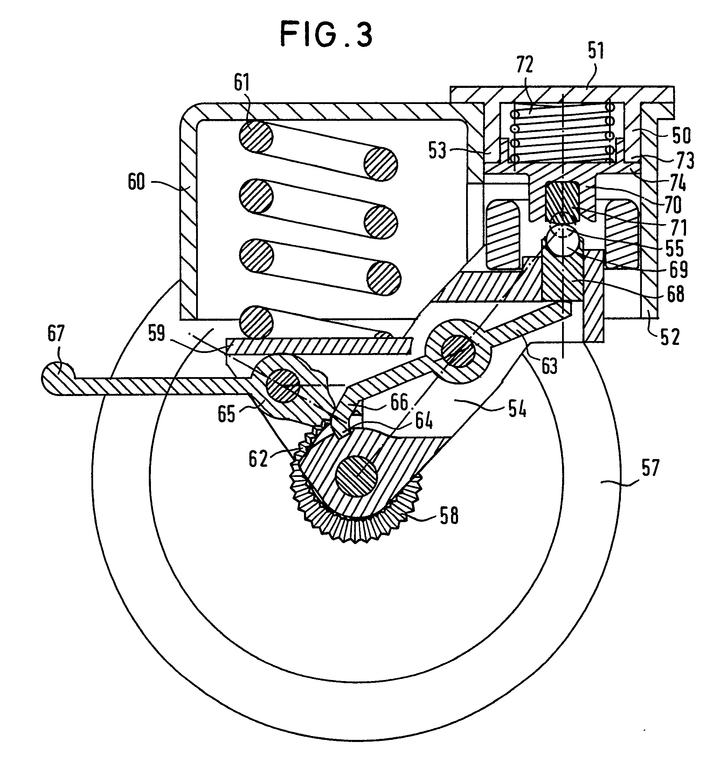

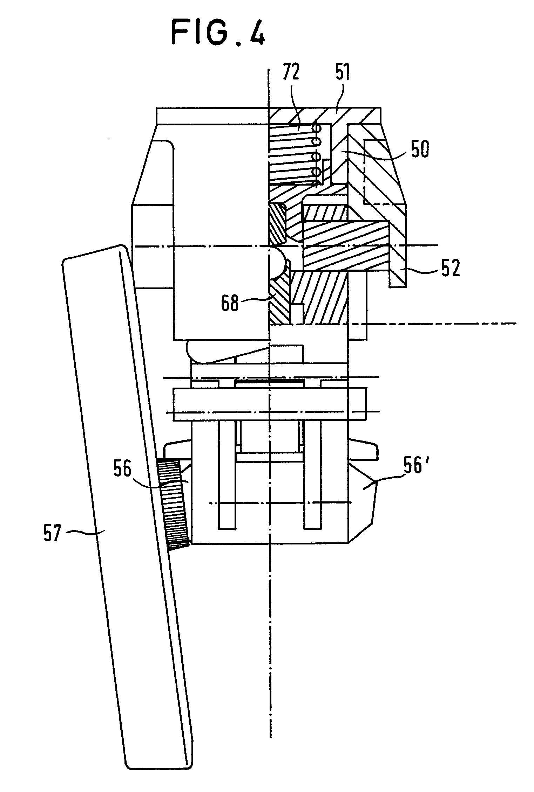

In den Fig. 3 und 4 ist eine alternative, konstruktiv einfachere Ausführung einer feststellbaren Lenkrolle dargestellt. Ein zylindrisch ausgebildeter Befestigungszapfen 50 trägt an seiner Oberseite eine Montageplatte 51, mit dem die Lenkrolle beispielsweise an die Unterseite eines (nicht dargestellten) Krankenbettes montierbar ist. Ein Schwenkarm 52 ist um die Längsachse des Befestigungszapfens 50 schwenkbar in einem hier als Gleitlager ausgebildeten Schwenklager 53 gelagert. Am Schwenkarm 52 ist ein Radträger 54 um eine Schwenkachse 55 schwingend gelagert. Seitlich sind an dem Radträger 54 zwei Achsstummel 56, 56' ausgebildet, auf denen jeweils ein Laufrad 57 mit seiner Nabe 58 drehbar gelagert ist. Das Laufrad 57 ist schräggestellt, so daß es mit negativem Sturz läuft.

Der Radträger 54 ist als einarmiger Hebel ausgebildet. An seinem freien Ende ist ein Federteller 59 ausgebildet. Der Schwenkarm 52 umfaßt ein Federgehäuse 60. Eine als Schraubenfeder ausgebildete Radfeder 61 ist zwischen dem Federgehäuse 60 und dem Federteller 59 angeordnet und federt die Schwenkbewegung des Radträgers 54 um dessen Schwingachse 55 gegenüber dem Schwenkarm 52 bzw. dem Federgehäuse 60 ab. Dabei verläuft die Schwingachse 55 parallel zur Drehachse des Laufrads 57.

Das Laufrad 57 trägt einen koaxial um seine Nabe 58 angeordneten Bremskranz 62. Auf dem Radträger 54 ist ein als zweiarmiger Hebel ausgebildeter Bremshebel 63 um eine Achse parallel zur Schwingachse 55 kippbar gelagert. An seinem einen Ende trägt der Bremshebel 63 ein Bremsorgan 64, das mit dem Bremskranz 62 zusammenwirkt. Ferner ist am Radträger 54 ein Drehexzenter 65 parallel zur Kippachse des Bremshebels 63 drehbar gelagert. Der Drehexzenter 65 wirkt auf den Bremshebel 63 in der Nähe des Bremsorgans 64 ein und verschwenkt diesen bei der Drehung so, daß das Bremsorgan 64 in Eingriff mit dem Bremskranz 62 kommt. Dabei gleitet der Drehexzenter 65 auf der Oberseite des Bremshebels 63 im Bereich einer Kröpfung 66. Zur Betätigung ist der Drehexzenter 65 mit einem Fußhebel 67 verbunden.

Innerhalb des Schwenkarms 52 ist ein zylindrischer Feststellbolzen 68 axial verschiebbar geführt. Der Feststellbolzen 68 trägt an seinem oberen Ende ein rundes Druckstück 69. Im oberen Teil des Schwenkarms 52 ist eine Aufnahme 70 ausgebildet. Zwischen dieser Aufnahme 70 und dem Druckstück 69 ist ein elastisches Zwischenelement 71 angeordnet.

Der Schwenkarm 52 ist gegenüber dem Befestigungszapfen 50 nicht nur horizontal verschwenkbar, sondern auch in vertikaler Richtung verschiebbar. Innerhalb des hohl ausgebildeten Befestigungszapfens 50 ist zwischen der Unterseite der Montageplatte 51 und der Oberseite des Schwenkarms 52 eine Hubfeder 72 angeordnet. Am unteren Ende des Befestigungszapfens 50 ist ein Zahnring 73 vorgesehen. Das gegenüberliegende obere Ende des Schwenkarms 52 trägt eine Gegenzahnung 74, welche gegen die Wirkung der Hubfeder 72 mit dem Zahnring 73 in Eingriff bringbar ist.

Fig. 3 zeigt den Fußhebel 67 in einer waagrechten Stellung, in der sowohl die Schwenkbewegung des Schwenkarms 52 gegenüber dem Befestigungszapfen 50 festgestellt als auch die Drehbewegung des Laufrads 57 blockiert ist. Der Drehexzenter 65 drückt in dieser Stellung das Bremsorgan 64 gegen den Bremskranz 62. Gleichzeitig wird der Feststellbolzen 68 durch das dem Bremsorgan 64 gegenüberliegende Ende des Bremshebels 63 in seiner oberen Endstellung gehalten. Über das Druckstück 69 und das elastisch zusammengepreßte Zwischenelement 71 ist die Gegenzahnung 74 des Schwenkarms 52 in Eingriff mit dem Zahnring 73 des Befestigungszapfens 50.

Wird der Fußhebel 67 nach oben verschwenkt, so ist dies mit einer Verdrehung des Drehexzenters 65 im Uhrzeigersinn verbunden. Unter der Wirkung der Hubfeder 72 verschiebt sich der Feststellbolzen 68 und der Schwenkarm 52 axial nach unten, so daß Zahnring 73 und Gegenzahnung 74 außer Eingriff kommen. Die Schwenkbeweglichkeit des Schwenkarms 52 ist somit wiederhergestellt. Gleichzeitig wird der Bremshebel 63, ebenfalls im Uhrzeigersinn, verschwenkt, wobei das Bremsorgan 64 vom Bremskranz 72 abhebt. Damit ist auch die Blockierung des Laufrads 57 aufgehoben.

## Ansprüche

1. Feststellbare Lenkrolle, insbesondere für verfahrbare Krankenbetten, mit
- einem Befestigungszapfen (1, 50);
- einem Schwenkarm (8, 25), der in einem Schwenklager (7, 35) um den Befestigungszapfen (1, 50) schwenkbar gelagert ist;
- einer Vorrichtung zum Feststellen der Schwenkbewegung des Schwenkarms (8, 52);
- wenigstens einem drehbar gelagerten Laufrad (13, 13'; 57);
- einem kippbar gelagerten Bremshebel (33, 63) zum Blockieren der Drehbewegung des Laufrads (13, 13'; 57);
- einem koaxial zum Befestigungszapfen (1, 50) angeordneten und gegenüber diesem in axialer Richtung gegen die Wirkung einer Hubfeder (25, 72) verschiebbaren Feststellbolzen (21, 68), der in Abhängigkeit seiner axialen Stellung den Schwenkarm (8, 52) feststellt und/oder über den Bremshebel (33, 63) das Laufrad (13, 13'; 57) blockiert;
dadurch **gekennzeichnet**, daß
- am Schwenkarm (8, 52) ein Radträger (10, 54) schwingend gelagert ist, der das Laufrad (13, 13'; 57) trägt;
- die Schwingachse (11, 55) des Radträgers (10, 54) im wesentlichen parallel zur Drehachse des Laufrads (13, 13'; 57) verläuft und die Längsachse des Feststellbolzens (21, 68) schneidet;
- der Bremshebel (33, 68) im Radträger (10, 54) gelagert ist;
- die Kippachse (34) des Bremshebels (33, 68) parallel zur Schwingachse (11, 55) des Radträgers (10, 54) verläuft;
- der Radträger (10, 54) sich über eine Radfeder (20, 61) am Schwenkarm (8, 52) federnd abstützt.

2. Feststellbare Lenkrolle nach Anspruch 1, dadurch **gekennzeichnet**, daß
- das Laufrad (13, 13'; 57) einen koaxial um seine Nabe (14, 14'; 58) angeordneten Bremskranz (36, 62) trägt;
- der Bremshebel (33, 63) als zweiarmiger Hebel ausgebildet ist, dessen eines Ende ein mit dem Bremskranz (36, 62) zusammenwirkendes Bremsorgan (35, 64) trägt und dessen anderes Ende mit dem unteren Ende des Feststellbolzens (21, 68) zusammenwirkt.

3. Feststellbare Lenkrolle nach Anspruch 1 oder 2, dadurch **gekennzeichnet**, daß der Radträger (10, 54) wenigstens einen Achsstummel (12, 12'; 56, 56') zur Aufnahme der Nabe (14, 14'; 58) des wenigstens einen Laufrads (13, 13'; 57) aufweist.

4. Feststellbare Lenkrolle nach einem der Ansprüche 1 bis 3, dadurch **gekennzeichnet**, daß die Radfeder (20, 61) als Schrauben-, Blatt- oder Drehstabfeder ausgebildet ist.

5. Feststellbare Lenkrolle nach Anspruch 4, dadurch **gekennzeichnet**, daß
- der Radträger (10, 54) als einarmiger Hebel ausgebildet ist;
- am freien Ende des Radträgers (10, 54) ein Federteller (18, 59) zur Aufnahme des unteren Endes der Radfeder (20, 61) vorgesehen ist;
- die Drehachse des Laufrads (13, 13'; 57) zwischen der Schwingachse (11, 55) und der Radfeder (20, 61) liegt.

6. Feststellbare Lenkrolle nach Anspruch 5, dadurch **gekennzeichnet**, daß
- der Radträger (10) einen Lagerzapfen (16) aufweist, der sich parallel zur Schwingachse (11) des Radträgers (10) erstreckt;
- auf dem Lagerzapfen (16) ein Federbock (17) kippbar gelagert ist;
- der Federteller (18) an der Oberseite dieses Federbockes (17) ausgebildet ist.

7. Feststellbare Lenkrolle nach einem der Ansprüche 1 bis 6, dadurch **gekennzeichnet**, daß
- im oberen Teil des Befestigungszapfens (1) ein Aufnahmeraum (26) ausgebildet ist;
- im diesem Aufnahmeraum (26) eine Exzenterscheibe (27) senkrecht zur Längsachse des Feststellbolzens (21) drehbar gelagert ist;
- eine Verdrehung der Exzenterscheibe (27) den Feststellbolzen (21) aus seiner oberen Ruhelage axial nach unten verschiebt.

8. Feststellbare Lenkrolle nach Anspruch 7, dadurch **gekennzeichnet**, daß
- im Befestigungszapfen (1) eine zylindrische Ausnehmung (24) um das obere Ende des Feststellbolzens (21) ausgebildet ist, welche in den Aufnahmeraum (26) mündet;
- die Exzenterscheibe (27) auf ein Druckstück (31) einwirkt, das in der Ausnehmung (24) axial verschieblich geführt ist;
- der Feststellbolzen (21) an seinem oberen Ende eine Kopfplatte (23) trägt;
- zwischen dem Druckstück (31) und der Kopfplatte (23) ein elastisches Zwischenelement (32) angeordnet ist.

9. Feststellbare Lenkrolle nach einem der Ansprüche 1 bis 8, dadurch **gekennzeichnet**, daß
- das Laufrad (57) einen koaxial um seine Nabe (58) angeordneten Bremskranz (62) trägt;
- der Bremshebel (63) als zweiarmiger Hebel ausgebildet ist, dessen eines Ende ein mit dem Bremskranz (62) zusammenwirkendes Bremsorgan (64) trägt, und dessen anderes Ende mit dem unteren Ende des Feststellbolzens (68) zusammenwirkt;

- ein Drehexzenter (65) am Radträger (54) parallel zur Kippachse des Bremshebels (63) drehbar gelagert ist;

- dieser Drehexzenter (65) auf den Bremshebel (63) in der Nähe des Bremsorgans (64) einwirkt.

10. Feststellbare Lenkrolle nach Anspruch 9, dadurch **gekennzeichnet**, daß der Drehexzenter (65) mit einem Fußhebel (67) verbunden ist.

11. Feststellbare Lenkrolle nach Anspruch 9, dadurch **gekennzeichnet**, daß der Feststellbolzen (68) innerhalb des Schwenkarms (52) axial verschiebbar geführt ist und unter der Wirkung eines elastischen Zwischenelements (71) steht.

FIG.1

FIG.2

# FIG.3

# FIG.4

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-C- 635 255 (BASLER EISENMÖBELFABRIK) <br> * Seite 1, Zeile 44 - Seite 2, Zeile 32; Figuren 1-3 * <br> --- | 1,4 | B 60 B 33/02 <br> B 60 B 33/04 |
| Y | US-A-2 885 720 (SEEBERGER) <br> * Spalte 1, Zeile 63 - Spalte 2, Zeile 20; Figuren 1,3 * <br> --- | 1,4 | |
| A | GB-A-2 160 415 (COLSON CASTORS) <br> * Seite 2, Zeilen 14-45; Figuren 1,7 * <br> --- | 1 | |
| A | DE-A-2 745 613 (KEVI) <br> * Seite 5, Zeilen 5-17; Figur 2 * <br> --- | 1,2,4 | |
| A | GB-A-2 132 478 (BRITISH CASTORS) <br> * Seite 1, Zeilen 90-99; Figur 2 * <br> ----- | 1 | |

RECHERCHIERTE SACHGEBIETE (Int. Cl.5)

B 60 B

Der vorliegende Recherchenbericht wurde für alle Patentansprüche erstellt

| Recherchenort | Abschlußdatum der Recherche | Prüfer |
|---|---|---|
| DEN HAAG | 25-04-1990 | AYITER I. |

EPO FORM 1503 03.82 (P0403)